# EUROPÄISCHE PATENTSCHRIFT

(11) **EP 0 570 410 B1**
(45) Veröffentlichungstag und Bekanntmachung des Hinweises auf die Patenterteilung: **28.06.1995**
(21) Anmeldenummer: 92903619.2
(22) Anmeldetag: 04.02.1992
(51) Int. Cl.: G11B 7/09, G11B 21/10

(54) **VERFAHREN ZUM LESEN VON DATEN VON EINEM ROTIERENDEN PLATTENFÖRMIGEN AUFZEICHNUNGSTRÄGER**
METHOD OF READING DATA OFF A ROTATING DISK-SHAPED RECORDING MEDIUM
PROCEDE DE LECTURE DES DONNEES ENREGISTREES SUR UN SUPPORT D'ENREGISTREMENT DISCO DE EN ROTATION

(30) Priorität: 09.02.1991 DE 4104017
(43) Veröffentlichungstag der Anmeldung: 24.11.1993
(73) Patentinhaber: Deutsche Thomson-Brandt GmbH, 78003 Villingen-Schwenningen (DE)
(72) Erfinder: BAAS, Dieter, D-7640 Kehl-Auenheim (DE); KÜHN, Hans-Robert, D-7742 St. Georgen (DE)
(86) Internationale Anmeldenummer: EP9200239
(87) Internationale Veröffentlichungsnummer: WO9214241

(56) Entgegenhaltungen:
- EP-A- 0 139 332
- EP-A- 0 249 781
- US-A- 4 701 897
- US-A- 4 821 251

## Beschreibung

Die Erfindung betrifft ein Verfahren zum Lesen von Daten von einem rotierenden plattenförmigen Aufzeichnungsträger, auf dem die Daten in spiralförmigen Datenspuren oder in konzentrischen Kreisen aufgezeichnet sind, indem eine Abtastvorrichtung mittels eines Spurregelkreises entlang der Datenspuren geführt wird, indem während des ersten Lesens der Daten des plattenförmigen Aufzeichnungsträgers die Adresse eines jeden Punktes des Aufzeichnungsträger, wo die Abtastvorrichtung die Datenspur verliert, in einem Speicher gespeichert wird und indem der Spurregelkreis ein erstes Regelsignal berechnet und erzeugt, um die Abtastvorrichtung wieder auf die abzutastende Datenspur zu führen.

Ein bekanntes Wiedergabegerät für plattenförmige rotierende Aufzeichnungsträger mit spiralförmigen Datenspuren ist der CD-Spieler.

In einem CD-Spieler tastet eine optische Abtastvorrichtung die spiralförmigen Datenspuren einer sogenannten Kompaktplatte mittels eines Lichtstrahls ab. Mittels einer Objektivlinse wird der Lichtstrahl von einem Fokusregelkreis auf die CD - die gebräuchliche Abkürzung für Kompaktplatte - fokussiert. Ein Spurregelkreis führt die optische Abtastvorrichtung so, daß der Lichtstrahl stets entlang der Datenspuren der CD geführt wird.

In der US-PS 4 821 251 ist es offenbart, in einem optischen Aufzeichnungs- und Wiedergabegerät defekte Sektoren der optischen Platte in einem Speicher zu speichern.Die fehlerhaften Sektoren werden vom Lesen und Schreiben von Daten ausgespart.

In der EP-A 0 139 332 ist ein optisches Wiedergabegerät beschrieben, das mittels einer optischen Abtastvorrichtung Daten von einer optischen Platte liest. Bei Spurverlust wird die jeweils vor dem Spurverlust letzte gültige Position der Abtastvorrichtung gespeichert, um möglichst schnell wieder die Abtastvorrichtung zur abzutastenden Datenspur zu lenken.

Aus der EP-A 0 249 781 ist ein optisches Wiedergabegerät bekannt, das mit einem Zwischenspeicher ausgerüstet ist. Die von einer optischen Platte gelesenen Daten werden zuerst im Zwischenspeicher gespeichert, ehe sie ausgegeben werden. Bei Spur- oder Fokusverlust, wenn keine Daten mehr gelesen werden können, werden die im Zwischenspeicher stehenden Daten zunächst ausgegeben, so daß eine Unterbrechung des Datenflusses vermieden wird. Wenn der Lichtstrahl wieder auf die richtige Spur gerichtet und fokussiert ist, wird der Zwischenspeicher wieder mit Daten aufgefüllt.

Kratzer oder Schmutz auf der Platte, wie z.B. Staub oder Fingerabdrücke beeinträchtigen jedoch die Musikwiedergabe. Wenn der Lichtstrahl an eine Stelle kommt, die z.B. durch Staub oder einen Fingerabdruck verschmutzt ist, läuft er unkontrolliert über die Datenspuren, weil keine Daten mehr lesbar sind und weil deshalb der Spurregelkreis kein Regelsignal mehr erzeugen kann. Sobald der Lichtstrahl wieder eine saubere Datenspur auf der Platte abtastet, prüft der Spurregelkreis, ob der Lichtstrahl noch auf die abzutastende Datenspur fokussiert ist. Meist ist er um einige Datenspuren radial nach innen oder außen versetzt. Der Spurregelkreis berechnet und erzeugt nun ein Regelsignal, damit der Lichtstrahl wieder auf die abzutastende Datenspur springt.

Die zwischen dem Punkt, wo der Lichtstrahl die abzutastende Datenspur verlassen hat, und dem Punkt, wo er wieder auf sie trifft, Liegenden Daten werden deshalb nicht wiedergegeben. Eine Unterbrechung der Musikwiedergabe läßt sich bei einem CD-Spieler noch vermeiden, wenn der Datenverlust durch Interpolation überbrückbar ist. Wenn aber die verschmutzte oder beschädigte Stelle auf der Platte zu groß ist, so wird der Hörgenuß durch eine störende Unterbrechung der Musikwiedergabe getrübt.

Es ist deshalb Aufgabe der Erfindung, ein Verfahren gemäß Oberbegriff des Anspruchs 1 oder 2 so zu gestalten, daß der durch verschmutzte oder beschädigte Stellen auf dem Aufzeichnungsträger verursachte Datenverlust möglichst gering ist.

Die Erfindung löst diese Aufgabe dadurch, daß in einem ersten Verfahrensschritt aus diesem ersten Regelsignal ein erstes modifiziertes Regelsignal berechnet und im Speicher gespeichert wird, daß bei jedem folgenden Lesen der Daten des Aufzeichnungsträgers sofort bei Erreichen eines jeden der gespeicherten Punkte der Spurregelkreis das zu dem erreichten Punkt zugehörende gespeicherte erste modifizierte Regelsignal aus dem Speicher erhält, um die Abtastvorrichtung auf der abzutastenden Datenspur zu halten.

Eine Weiterbildung der Erfindung sieht vor, daß in einem ersten Verfahrensschritt die Daten des Aufzeichnungsträgers ein erstes Mal gelesen werden, daß während des ersten Lesens der Daten die Adresse eines jeden Punktes des Aufzeichnungsträgers, wo die Abtastvorrichtung die Datenspur verliert, in einem Speicher gespeichert wird, daß aus dem Regelsignal, das der Spurregelkreis erzeugt, um die Abtastvorrichtung wieder auf die abzutastende Datenspur zu führen, ein erstes modifiziertes Regelsignal berechnet und im Speicher gespeichert wird, daß in einem zweiten Verfahrensschritt jeder gespeicherte Punkt von der Abtastvorrichtung angefahren wird, daß sofort bei Erreichen eines jeden dieser Punkte der Spurregelkreis das gespeicherte zugehörende erste modifizierte Regelsignal aus dem Speicher erhält, um die Abtastvorrichtung möglichst nahe der abzutastenden Datenspur zu halten, daß aus dem Regelsignal, das der Spurregelkreis erzeugt, um die Abtastvorrichtung auf die abzutastende Datenspur zu führen, ein zweites modifiziertes Regelsignal berechnet und im Speicher gespeichert wird, daß der zweite Verfahrensschritt so lange wiederholt wird, bis sich die Richtung der Spurabweichung bzw. das Vorzeichen des modifizierten Regelsignales umkehrt, daß bei jedem folgenden Lesen der Daten des Aufzeichnungsträgers entweder das die Umkehrung der Richtung verursachende modifizierte Regelsignal oder das unmittelbar vor der Umkehrung der Richtung ermittelte modifizierte Regelsignal beibehalten und sofort bei Erreichen eines jeden der gespeicherten Punkte vom Speicher an den Spurregelkreis abgegeben wird.

Es zeigen
- Figur 1: ein Wiedergabegerät zur Durchführung des erfindungsgemäßen Verfahrens;
- Figur 2: einen Ausschnitt aus einer Kompaktplatte mit einer verschmutzten Stelle.

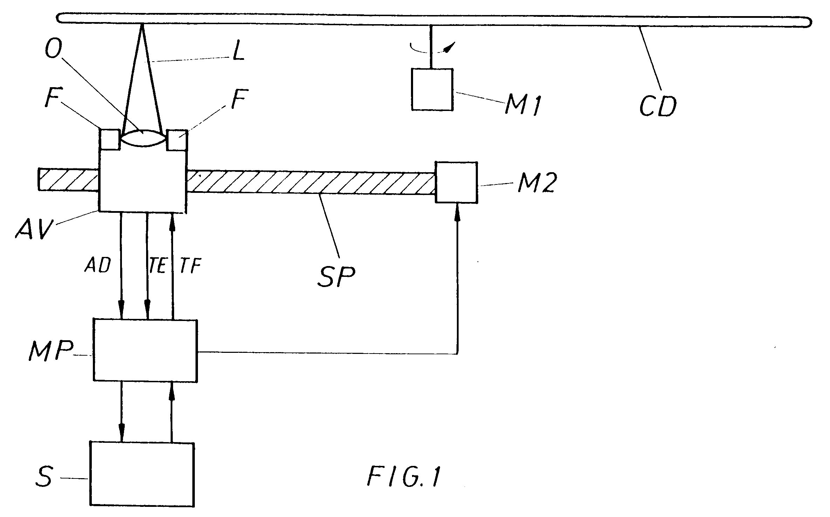

In der Figur 1 ist beispielhaft ein CD-Spieler gezeigt, der zur Durchführung des erfindungsgemäßen Verfahrens geeignet ist.

Ein Motor M1 dreht die Kompaktplatte CD, die von einer optischen Abtastvorrichtung AV mittels eines Lichtstrahls L abgetastet wird. Der Lichtstrahl L wird mittels einer Objektivlinse 0 auf die Platte CD fokussiert. Mittels eines Feinantriebs F ist die Objektivlinse 0 relativ zur Abtastvorrichtung AV ein kleines Stück radial nach innen oder außen bewegbar, wie der Doppelpfeil andeutet.

Die optische Abtastvorrichtung AV sitzt auf einer Spindel SP, die von einem Motor M2 angetrieben wird. Die optische Abtastvorrichtung AV läßt sich deshalb in radialer Richtung bewegen, damit der Lichtstrahl L entlang der Datenspuren an der Platte CD geführt werden kann. Die Spindel SP und der Motor M2 werden als Grobantrieb bezeichnet.

Im normalen Regelbetrieb erhält eine Regelschaltung MP ein Spurfehlersignal TE von der optischen Abtastvorrichtung AV; aus dem Spurfehlersignal TE erzeugt die Regelschaltung MP ein Regelsignal TF für den Feinantrieb und ein Regelsignal TG für den Grobantrieb. Der Fein- und der Grobantrieb wirken derart zusammen, daß der Lichtstrahl L entlang den Datenspuren der Platte CD geführt wird. Außerdem gibt die optische Abtastvorrichtung AV die Adresse AD des jeweils abgetasteten Punktes auf der Platte CD an die Regelschaltung MP. Wenn nun der Lichtstrahl z.B. an eine verschmutzte Stelle gelangt, erhält die Regelschaltung MP kein Spurfehlersignal TE mehr. Gemäß dem im Anspruch 1 beschriebenen Verfahren bewirkt die Regelschaltung MP nun, daß die Adresse des zuletzt noch erfaßten Punktes im Speicher S gespeichert wird. Sobald die Regelschaltung MP wieder ein Spurfehlersignal TE erhält, stellt sie die Abweichung des Lichtstrahls L von der abzutastenden Datenspur fest und berechnet von dieser Spurabweichung ein Regelsignal, um den Lichtstrahl L wieder auf die abzutastende Datenspur zu richten. Aus diesem Regelsignal wird ein modifiziertes Regelsignal berechnet und als zu dem gespeicherten Punkt gehörend im Speicher S gespeichert.

Dieses Verfahren wird an jeder verschmutzten oder beschädigten Stelle der Platte CD wiederholt, um die Adressen aller Punkte und die zugehörenden modifizierten Regelsignale zu speichern. Im Speicher S sind daher sowohl alle Punkte der Platte CD gespeichert, wo der der Lichtstrahl die Datenspur verliert, als auch das zu jedem Punkt gehörende modifizierte Regelsignal.

Wenn im Abspielbetrieb der Lichtstrahl L an einem der gespeicherten Punkte ankommt, stellt dies die Regelschaltung MP durch Vergleich mit der gespeicherten Adresse fest. Bei Gleichheit der von der optischen Abtastvorrichtung AV gelieferten Adresse mit der im Speicher S gespeicherten Adresse holt die Regelschaltung MP das zu diesem Punkt gehörence modifizierte Regelsignal aus dem Speicher S und gibt es an den Spurregelkreis ab, um den Lichtstrahl möglichst schnell wieder auf die abzutastende Dctenspur zu richten.

Die gemäß dem Verfahren aus Anspruch 2 erzeugten modifizierten Regelsignale werden ebenfalls im Speicher S gespeichert.

Beim Verfahren nach Anspruch 2 sind nach dem ersten Abspielen der Platte CD die Adressen der verschmutzten oder beschädigten Stellen sowie die zugehörenden ersten modifizierten Regelsignale im Speicher gespeichert. Im zweiten Verfahrensschritt bewirkt die Regelschaltung MP, daß jeder der gespeicherten Punkte von der optischen Abtastvorrichtung AV angefahren wird und das zugehörende modifizierte erste Regelsignal, das im Speicher S gespeichert ist, an den Spurregelkreis abgegeben wird. Der Spurregelkreis erzeugt nun ein Regelsignal, um den Lichtstrahl L wieder auf die abzutastende Datenspur zu richten. Aus diesem Regelsignal oder aus der Spurabweichung wird ein zweites modifiziertes Regelsignal berechnet und anstelle des ersten modifizierten Regelsignals im Speicher S gespeichert.

Dieser zweite Verfahrensschritt wird nun so lange für jeden gespeicherten Punkt wiederholt, bis sich entweder die Richtung der Spurabweichung oder das Vorzeichen des Regelsignales umkehrt. Im Speicher S bleibt dann entweder das unmittelbar in dem Verfahrensschritt vor der Vorzeichenumkehr gespeicherte modifizierte Regelsignal oder das bei der Vorzeichenumkehr berechnete modifizierte Regelsignal stehen; es wird nicht mehr durch ein neues modifiziertes Regelsignal überschrieben.

Während des Abspielens der CD holt sich die Regelschaltung MP jedesmal, wenn der Lichtstrahl L an einen der gespeicherten Punkte kommt, das zugehörende modifizierte Regelsignal aus dem Speicher S, um den Lichtstrahl möglichst kurz hinter der verschmutzten oder beschädigten Stelle wieder auf die abzutastende Datenspur zu richten.

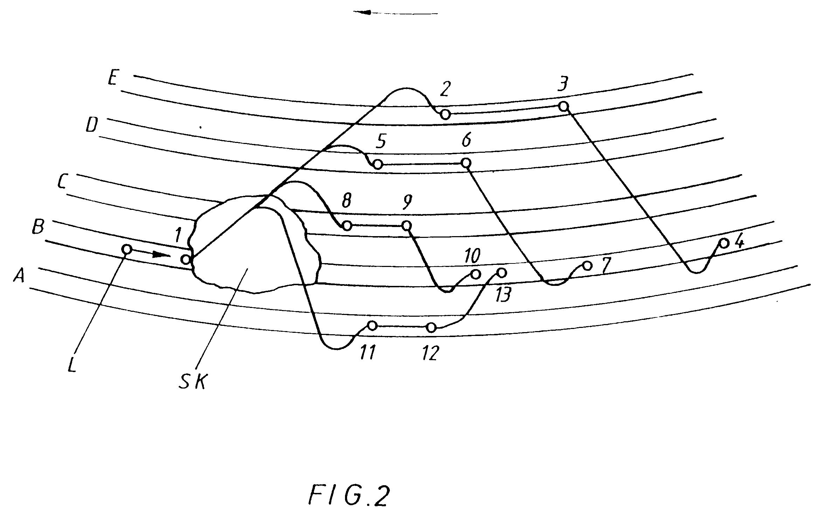

Anhand der Figur 2 wird nun die Wirkung des erfindungsgemäßen Verfahrens nach Anspruch 1 und 2 erläutert.

In der Figur 2 ist ein Ausschnitt aus einer Kompaktplatte CD mit fünf spiralförmigen Datenspuren A, B, C, D und E gezeigt. Ein Staubkorn SK bedeckt einen Teil der Datenspuren B und C. Die Platte CD wird in Pfeilrichtung gedreht. Der Lichtstrahl L bewegt sich daher in Pfeilrichtung von links nach rechts entlang der Datenspur B.

Wenn der Lichtstrahl am Punkt 1 ankommt, können wegen des Staubkorns SK keine Daten mehr gelesen werden, und es kann deshalb kein Spurfehlersignal TE mehr erzeugt werden. Die Adresse des Punktes 1 wird im Speicher S gespeichert.

Ohne Spurfehlersignal TE läuft aber hinter dem Punkt 1 der Lichtstrahl L unkontrolliert über die Datenspuren. In der Figur 2 läuft er beispielsweise um drei Datenspuren radial nach innen bis zur Datenspur E, wo ihn der Spurregelkreis wieder einfängt und ab dem Punkt 2 auf der Datenspur E führt. Nach kurzer Zeit, wenn der Lichtstrahl am Punkt 3 steht, hat die Regelschaltung MP erkannt, daß der Lichtstrahl drei Datenspuren zu weit radial nach innen gerückt ist. Sie gibt deshalb ein Regelsignal an den Spurregelkreis ab, das den Lichtstrahl zum Punkt 4 auf der abzutastenden Datenspur B führt. Aus diesem Regelsignal wird ein modifiziertes Regelsignal berechnet und ebenfalls mit der Adresse des Punktes 1 im Speicher S gespeichert.

Alle zwischen den Punkten 1 und 4 auf der Datenspur B liegenden Daten sind vom Lichtstrahl L nicht abgetastet worden. Die Erfindung geht nun von der Erkenntnis aus, daß nicht alle zwischen den Punkten 1 und 4 liegenden Daten, sondern nur ein Teil davon vom Staubkorn SK bedeckt sind.

Gemäß dem im Anspruch 1 beschriebenen erfindungsgemäßen Verfahren wird beim Abspielen der Platte das im Speicher S stehende modifizierte Regelsignal an den Spurregelkreis abgegeben, wenn der Lichtstrahl den Punkt 1 auf der Datenspur B abtastet. Deshalb wird der Lichtstrahl nicht mehr bis zur Datenspur E, sondern z.B. nur noch bis zur Datenspur D ausgelenkt, wo er im Punkt 5 vom Spurregelkreis eingefangen wird. Am Punkt 6 auf der Datenspur D hat die Regelschaltung MP erkannt, daß der Lichtstrahl um zwei Datenspuren radial nach außen zu versetzten ist, um wieder auf die abzutastende Datenspur B zu treffen. Die Regelschaltung MP erzeugt deshalb ein Regelsignal, damit sich der Lichtstrahl vom Punkt 6 der Datenspur D zum Punkt 7 der abzutastenden Datenspur B bewegt. Der Bereich der nichtgelesenen Daten ist geschrumpft, denn er erstreckt sich jetzt auf der Datenspur B nur noch vom Punkt 1 zum Punkt 7.

Mit dem im Anspruch 2 angegebenen Verfahren wird der Bereich der nichtabgetasteten Daten weiter eingeschränkt.

Beim ersten Lesen der Daten bewegt sich der Lichtstrahl vom Punkt 1 zum Punkt 2, weiter zum Punkt 3 und von dort zum Punkt 4 auf der Datenspur B. Wie beim Verfahren gemäß Anspruch 1 werden die Adresse des Punktes 1 und das zugehörende erste modifizierte Regelsignal im Speicher S gespeichert, das auf die gleiche Weise wie beim Verfahren gemäß Anspruch 1 berechnet wird.

In einem zweiten Verfahrensschritt wird der Punkt 1 angefahren und das gespeicherte erste modifizierte Regelsignal an den Spurregelkreis abgegeben. Der Lichtstrahl L wird jetzt vom Spurregelkreis am Punkt 5 auf der Datenspur D eingefangen. Die Regelschaltung MP erkennt am Punkt 6, daß der Lichtstrahl um zwei Datenspuren radial nach außen zu versetzen ist, um wieder auf die abzutastende Datenspur B zu treffen. Sie erzeugt deshalb ein Regelsignal, das bewirkt, daß der Lichtstrahl vom Punkt 6 auf der Datenspur D auf den Punkt 7 der Datenspur B gelenkt wird. Aus diesem Regelsignal wird ein zweites modifiziertes Regelsignal berechnet und im Speicher S gespeichert.

In einem weiteren Verfahrensschritt fährt der Lichtstrahl erneut zum Punkt 1; weil der Spurregelkreis jetzt das im Speicher S abgelegte zweite modifizierte Regelsignal erhält, wird der Lichtstrahl bereits nach der Datenspur C eingefangen und auf den Punkt 8 der Datenspur C gelenkt. Am Punkt 9 der Datenspur C hat die Regelschaltung MP ein Regelsignal berechnet und erzeugt, das den Lichtstrahl auf den Punkt 10 der abzutastenden Datenspur B lenkt. Aus diesem Regelsignal wird ein drittes modifiziertes Regelsignal berechnet und im Speicher S gespeichert.

Der Punkt 1 wird jetzt ein drittes Mal vom Lichtstrahl L angefahren. Der Spurregelkreis erhält vom Speicher S das dritte modifizierte Regelsignal. Das dritte modifizierte Regelsignal bewirkt aber jetzt, daß der Lichtstrahl radial nach außen zur Datenspur A ausgelenkt wird. Der Spurregelkreis fängt den Lichtstrahl L auf und lenkt ihn auf den Punkt 11 der Datenspur A. Am Punkt 12 der Datenspur A gibt die Regelschaltung MP, nachdem sie am Punkt 11 erkannt hat, daß der Lichtstrahl um eine Datenspur radial nach außen von der abzutastenden Datenspur B versetzt ist, ein Regelsignal an den Spurregelkreis ab, damit der Lichtstrahl auf die abzutastende Datenspur B gelenkt wird. Weil aber bei diesem Verfahrensschritt sich das Vorzeichen der Spurabweichung und somit auch des Regelsignals umgekehrt hat, bleibt das dritte modifizierte Regelsignal im Speicher S stehen.

Es ist jedoch auch möglich, aus dem zuletzt erzeugten Regelsignal ein viertes modifiziertes Regelsignal zu berechnen und im Speicher S zu speichern. Weil in beiden Fällen das optimale modifizierte Regelsignal gefunden und gespeichert ist, kann der Spielbetrieb beginnen.

Wenn im Spielbetrieb der Lichtstrahl am Punkt 1 auf der Datenspur B ankommt, gibt die Regelschaltung MP das im Speicher S zum Punkt 1 gehörende optimale modifizierte Regelsignal an den Spurregelkreis ab. Das ist entweder das dritte oder das vierte modifizierte Regelsignal.

Ist das dritte modifizierte Regelsignal im Speicher S als ocp timales modifiziertes Regelsignal gespeichert, so bewegt sich der Lichtstrahl vom Punkt 1 zum Punkt 2, weiter zum Punkt 8 auf der Datenspur C, dann zum Punkt 9 auf der Datenspur C und von dort zum Punkt 10 auf der abzutastenden Datenspur B.

Dagegen bewegt sich der Lichtstrahl vom Punkt 2 zum Punkt 11 der Datenspur A, weiter zu Punkt 12 der Datenspur A und von dort zum Punkt 13 auf der abzutastenden Datenspur B, wenn im Speicher S das vierte modifizierte Regelsignal als optimales modifiziertes Regelsignal gespeichert ist.

Die Menge der nicht abgetasteten Daten wird, wie in der Figur 2 ersichtlich ist, durch das erfindungsgemäße Verfahren des Anspruchs 2 wesentlich verringert.

Um welches Maß die Menge der nichtabgetasteten Daten verringert wird, hängt hauptsächlich von der Größe und Form der verschmutzten oder beschädigten Stellen auf der Platte ab. Das am Beispiel des Staubkorns SK erläuterte Verfahren wird an allen verschmutzten oder beschädigten Stellen der Platte durchgeführt.

Ein erstes im Anspruch 3 beschriebenes Ausführungsbeispiel sieht vor, daß die Drehzahl der Platte erhöht wird, während das optimale modifizierte Regelsignal schrittweise ermittelt wird. Dadurch wird die zur Durchführung des Verfahrens erforderliche Zeit verkürzt.

Bei einem zweiten Ausführungsbeispiel der Erfindung, das im Anspruch 4 beschrieben ist, kann der Bediener wahlweise das erfindungsgemäße Verfahren starten oder anhalten.

Das im Anspruch 5 angegebene dritte Ausführungsbeispiel sieht vor, daß die Adressen derjenigen Punkte und der zugehörenden modifizierten Regelsignale im Speicher automatisch gelöscht werden, wenn der Lichtstrahl an diesen Punkten nicht mehr die Datenspur verliert. Das kann z.B. dann der Fall sein, wenn der Benutzer die Platte sorgfältig von Schmutz und Fingerabdrücken gereinigt hat.

Ein viertes Ausführungsbeispiel, das im Anspruch 6 angegeben ist, bietet dem Bediener die Möglichkeit, selbst jederzeit die Adressen und modifizierten Regelsignale im Speicher zu löschen.

Gemäß einem fünften im Anspruch 7 beschriebenen Ausführungsbeispiel werden die Platten gekennzeichnet; für jede gekennzeichnete Platte werden die Adressen der verschmutzten oder beschädigten Stellen sowie die zugehörenden modifizierten Regelsignale gespeichert.

Es ist auch möglich, wie das im Anspruch 8 angegebene Ausführungsbeispiel zeigt, die Platten eines Magazins als zu dem Magazin gehörend zu kennzeichnen. Die Adressen der Punkte und die zugehörenden modifizierten Regelsignale werden nach Platten und Magazin geordnet gespeichert.

Weil die Stellen, wo der Lichtstrahl die Datenspur verliert, meist durch Staub oder Fingerabdrücke verschmutzt sind, ist es sinnvoll, dem Bediener durch ein optisches und/oder akustisches Signal die Reinigung der Platte zu empfehlen, wenn sich eine oder mehrere Stellen auf der Platte befinden, wo der Lichtstrahl die abzutastende Datenspur verläßt. Als Kriterium kann hierfür z.B. der Inhalt des Speichers dienen. Sobald eine Adresse eines Punktes im Speicher gespeichert ist, kann das optische und/oder akustische Signal erzeugt werden. Beispielsweise kann auf einer Anzeigevorrichtung, einem sogenannten Display, die Schrift "Platte reinigen" erscheinen.

Die Erfindung ist für Wiedergabegeräte geeignet, die einen plattenförmigen rotierenden Aufzeichnungsträger berührungslos, z.B. mit einem Lichtstrahl abtasten. Als Beispiel seien CD-Spieler, Videoplattenspieler, DRAW-Disc-Spieler und magneto-optische Aufzeichnungs- und Wiedergabegeräte genannt.

## Patentansprüche

1. Verfahren zum Lesen von Daten von einem rotierenden plattenförmigen Aufzeichnungsträger (CD), auf dem die Daten in spiralförmigen Datenspuren (A, B, C, D, E) oder in konzentrischen Kreisen aufgezeichnet sind, indem eine Abtastvorrichtung (AV) mittels eines Spurregelkreises entlang den Datenspuren geführt wird, indem während des ersten Lesens der Daten des plattenförmigen Aufzeichnungsträgers (CD) die Adresse eines jeden Punktes (1) des Aufzeichnungsträger, wo die Abtastvorrichtung (AV) die Datenspur (B) verliert, in einem Speicher (S) gespeichert wird, indem der Spurregelkreis ein erstes Regelsignal berechnet und erzeugt, um die Abtastvorrichtung (AV) wieder auf die abzutastende Datenspur (B) zu führen, **dadurch gekennzeichnet**, daß in einem ersten Verfahrensschritt aus diesem ersten Regelsignal ein erstes modifiziertes Regelsignal berechnet und im Speicher (S) gespeichert wird, daß bei jedem folgenden Lesen der Daten des Aufzeichnungsträgers (CD) sofort bei Erreichen eines jeden der gespeicherten Punkte (1) der Spurregelkreis das zu dem erreichten Punkt (1) zugehörende gespeicherte erste modifizierte Regelsignal aus dem Speicher (S) erhält, um die Abtastvorrichtung (AV) auf der abzutastenden Datenspur (B) zu halten.

2. Verfahren nach Anspruch 1, **dadurch gekennzeichnet**, daß in einem zweiten Verfahrensschritt der Spurregelkreis ein zweites Regelsignal erzeugt, um die Abtastvorrichtung (AV) auf die abzutastende Datenspur (B) zu führen, daß aus diesem zweiten Regelsignal ein zweites modifiziertes Regelsignal berechnet und im Speicher (S) gespeichert wird, daß der zweite Verfahrensschritt so lange wiederholt wird, bis sich die Richtung der Spurabweichung oder das Vorzeichen des vom Spurregelkreis erzeugten zweiten Regelsignales umkehrt, daß bei jedem folgenden Lesen der Daten des Aufzeichnungsträgers (CD) entweder das die Umkehrung der Spurabweichung verursachende modifizierte zweite Regelsignal oder das unmittelbar vor der Umkehrung der Spurabweichung ermittelte modifizierte zweite Regelsignal beibehalten und sofort bei Erreichen eines jeden der gespeicherten Punkte (1) vom Speicher (S) an den Spurregelkreis abgegeben wird.

3. Verfahren nach Anspruch 2, **dadurch gekenn****zeichnet,** daß während des zweiten Verfahrensschrittes und dessen Wiederholung die Drehzahl der Platte (CD) erhöht wird, um die für das Verfahren erforderliche Zeit zu verkürzen.

4. Verfahren nach Anspruch 1, 2 oder 3, **dadurch gekennzeichnet**, daß der Bediener wahlweise das Verfahren starten oder anhalten kann.

5. Verfahren nach Anspruch 1, 2, 3 oder 4, **dadurch** **gekennzeichnet**, daß die im Speicher (S) stehenden Daten automatisch für jeden Punkt gelöscht werden, der keine Spurabweichung mehr verursacht.

6. Verfahren nach Anspruch 1, 2, 3, 4 oder 5, **dadurch** **gekennzeichnet**, daß die im Speicher (S) stehenden Daten vom Bediener jederzeit gelöscht werden können.

7. Verfahren nach Anspruch 1, 2, 3, 4, 5 oder 6, **da****durch gekennzeichnet**, daß die einzelnen Aufzeichnungsträger (CD) gekennzeichnet sind und daß die Punkte, wo die Abtastvorrichtung (AV) die Datenspur verliert, und die zugehörenden modifizierten Regelsignale für jeden der gekennzeichneten Aufzeichnungsträger speicherbar sind.

8. Verfahren nach Anspruch 7, **dadurch gekennzeichnet**, daß die Aufzeichnungsträger eines Magazins und das Magazin selbst gekennzeichnet sind, daß die Punkte, wo die Abtastvorrichtung die Datenspur verliert, und die zugehörenden modifizierten Regelsignale nach Aufzeichnungsträger und nach Magazin geordnet speicherbar sind.

9. Verfahren nach einem oder mehreren der vorangehenden Ansprüche, **dadurch gekennzeichnet**, daß ein optisches und/oder akustisches Signal dem Bediener die Reinigung des Aufzeichnungsträgers empfiehlt, wenn auf dem Aufzeichnungsträger ein oder mehrere Punkte gefunden werden, wo die Abtastvorrichtung die Datenspur verliert.

## Claims

1. Method for reading the data from a rotating disk-type recording medium (CD) on which the data are recorded in helical data tracks (A,B,C,D,E) or in concentric circles in which a scanning device (AV) is guided along the data tracks by means of a tracking regulation circuit, during the initial reading of the data of the disk-type recording medium (CD), the address of every single point (1) of the recording medium where the scanning device (AV) loses the data track (B) is stored in a memory (S), and in which the tracking regulation circuit calculates and generates a regulating signal in order to guide the scanning device (AV) back onto the data track (B) which is to be scanned, characterised in that in a first method step a modified regulating signal is calculated from this regulating signal and then stored in the memory (S), that upon reaching any one of the stored points (1) during each subsequent reading of the data of the recording medium (CD), the tracking regulation circuit immediately receives the stored modified regulating signal belonging to the point (1) which has been reached in order to keep the scanning device (AV) on the data track (B) which is to be scanned.

2. Method according to claim 1, characterised in that the tracking regulation circuit generates a second regulating signal in order to guide the scanning device (AV) onto the data track (B) which is to be scanned, that a second modified regulating signal is calculated from this second regulating signal and then stored in the memory (S), that the second procedure step is repeated until the direction of the tracking deviation or the sign of the regulating signal generated by the tracking regulation circuit reverses, that during each subsequent reading of the data of the recording medium (CD) either the modified regulating signal causing the reversal of the tracking deviation or the modified regulating signal determined immediately before the reversal of the tracking deviation is retained and sent from the memory (S) to the tracking regulation circuit immediately upon reaching each one of the stored points (1).

3. Method according to claim 2, characterised in that during the second procedure step and its repetition, the rotational speed of the disk (CD) is increased in order to shorten the time required for the method.

4. Method according to claim 1, 2 or 3, **charac****terized in that** the operator can select whether to start or stop the method.

5. Method according to claim 1, 2, 3 or 4, **char****acterized in that** the data present in the memory (S) is automatically deleted for each point which no longer causes a tracking deviation.

6. Method according to claim 1, 2, 3, 4 or 5, **characterized in that** the data present in the memory (S) can be deleted by the operator at any time.

7. Method according to claim 1, 2, 3, 4, 5 or 6, **characterized in that** the individual recording media (CD) are provided with an identification and that the points where the scanning device (AV) loses the data track and the associated modified regulating signals can be stored for each of the identified recording media.

8. Method according to claim 7, **character****ized in that** the recording media in a magazine and the magazine itself are provided with an identification, that the points where the scanning device loses the data track and the associated modified regulating signals can be stored in an order according to recording medium and according to magazine.

9. Method according to one or more of the preceding claims, **characterised** **in that** a visual and/or acoustic signal recommends to the operator that recording medium should be cleaned if one or more points are found on the disk where the scanning device loses the data track.

## Revendications

1. Procédé de lecture de données d'un support d'informations (CD) en forme de disque en rotation, sur lequel les données sont enregistrées sur des pistes en spirale (A, B, C, D, E) ou en cercles concentriques, un dispositif d'exploration (AV) étant guidé le long des pistes de données par un circuit de suivi de piste, procédé dans lequel, pendant la lecture initiale des données du support d'informations en forme de disque (CD), l'adresse de chaque point (1) du support d'informations où le dispositif d'exploration (AV) perd la piste de données (B), est mémorisée dans une mémoire (S) et dans lequel le circuit de suivi de piste calcule et génère un premier signal de réglage pour ramener le dispositif d'exploration (AV) sur la piste de données à explorer (B), caractérisé en ce que dans une première étape du procédé un premier signal de réglage modifié est calculé à partir de ce premier signal de réglage et mémorisé dans la mémoire (S), en ce qu'à chaque lecture subséquente des données du support d'informations (CD), dès que chacun des points mémorisés (1) est atteint, le circuit de suivi de piste reçoit le premier signal de réglage modifié mémorisé correspondant au point atteint (1) afin de maintenir le dispositif d'exploration (AV) sur la piste de données (B) à explorer.

2. Procédé selon la revendication 1, caractérisé en ce que dans une seconde étape du procédé, le circuit de suivi de piste génère un deuxième signal de réglage pour guider le dispositif d'exploration (AV) sur la piste de données (B) à explorer, en ce qu'un deuxième signal de réglage modifié est calculé à partir de ce deuxième signal de réglage et mémorisé dans la mémoire (S), en ce que la deuxième étape du procédé est répétée jusqu'à ce que le sens de la déviation de piste ou le signe du deuxième signal de réglage généré par le circuit de suivi de piste s'inverse, en ce qu'à chaque lecture suivante des données du support d'informations (CD), soit le deuxième signal de réglage modifié qui inverse la direction, soit le deuxième signal de réglage modifié déterminé juste avant l'inversion de la direction est conservé et transmis au circuit de suivi de piste par la mémoire (S) dès que l'un des points mémorisés (1) est atteint.

3. Procédé selon la revendication 2, caractérisé en ce que la vitesse de rotation du disque (CD) est augmentée durant la deuxième phase du procédé afin de réduire le temps nécessaire pour le procédé.

4. Procédé selon la revendication 1, 2 ou 3, caractérisé en ce que l'utilisateur peut, au choix, lancer ou arrêter le procédé.

5. Procédé selon la revendication 1, 2, 3 ou 4, caractérisé en ce que les données mémorisées dans la mémoire (S) sont automatiquement effacées pour chaque point qui ne provoque plus de déviation de piste.

6. Procédé selon la revendication 1, 2, 3, 4 ou 5, caractérisé en ce que l'utilisateur peut effacer à tout moment les données mémorisées dans la mémoire (S).

7. Procédé selon la revendication 1, 2, 3, 4, 5 ou 6, caractérisé en ce que les différents supports d'informations (CD) sont identifiés, que les points où le dispositif d'exploration (AV) perd la piste de données et que les signaux de réglage modifiés correspondants peuvent être mémorisés pour chacun des supports d'informations identifiés.

8. Procédé selon la revendication 7, caractérisé en ce que les supports d'informations d'un chargeur ou le chargeur lui-même sont identifiés, en ce que les points où le dispositif d'exploration perd la piste de données et les signaux de réglage modifiés correspondants peuvent être mémorisés par support d'informations ou par chargeur.

9. Procédé selon l'une ou plusieurs des revendications 1, 2, 3, 4, 5, 6, 7 ou 8 caractérisé en ce qu'un signal optique et/ou acoustique recommande à l'utilisateur de nettoyer le support d'informations quand un ou plusieurs points où le dispositif d'exploration perd la piste de données ont été trouvés sur le disque.
